# EUROPEAN PATENT APPLICATION

(11) **EP 4 194 373 A1**
(43) Date of publication of application: **14.06.2023**
(21) Application number: 22211323.5
(22) Date of filing: 05.12.2022
(51) Int. Cl.: B65G 17/32, B65G 47/90

(54) **GRIPPING MEMBER FOR CONTAINER RETAINING AND TRANSPORT EQUIPMENT, CONTAINER RETAINING AND TRANSPORT EQUIPMENT AND METHOD FOR TRANSPORTING AND RETAINING A CONTAINER**

(30) Priority: 09.12.2021 IT 202100030905
(71) Applicant: Azionaria Costruzioni Macchine Automatiche A.C.M.A. S.p.A., 40131 Bologna (IT)
(72) Inventor: MATRA', Luca, I-40131 BOLOGNA (BO) (IT); RIGHETTI, Marco, I-40131 BOLOGNA (BO) (IT)
(74) Representative: Porta & Consulenti Associati S.p.A.

(57) **Abstract**

A gripping member (100) for container retaining and transport equipment (10) comprises a plurality of gripping bodies (110) having respective contact surfaces (111) configured to contact a container (C) and a connection body (105) connected to said plurality of gripping bodies (110) and connecting the gripping bodies (110) to each other and is deformable between a storage configuration and a gripping configuration, in the storage configuration said connection body (105) is in a undeformed condition and arranges said gripping bodies (110) parallel to respective first directions (D1) and with the respective contact surfaces (111) not facing each other; in the gripping configuration said connection body (105) is in a reversibly deformed condition and elongated in directions contained in a single reference plane (P) and wherein the gripping bodies (110) are parallel to respective second directions (D2) not contained in said single reference plane (P), with respective contact surfaces (111) facing each other.

## Description

The present invention refers to a gripping member for container retaining and transport equipment, to a piece of container retaining and transport equipment and to a method for retaining and transporting containers, wherein said container is retained in a predetermined orientation to allow filling, capping, labelling and/or other processing on the container while the retaining and transport equipment and the container are moving along an automated line.

Retaining and transport equipment, also known as "puck" or "puck carrier", is typically used in automated production lines to retain and transport the containers in a desired orientation, for example to retain containers in a vertical position.

The retaining and transport equipment is usually placed in a path of an automated production line and each piece of equipment is associated with a respective container which is retained by the retaining and transport equipment.

The retaining and transport equipment with the container travels along the path of the automated production line and crosses one or more processing stations where different operations are performed, during which for example the container can be filled with one or more materials, the container can be subjected to pre-filling and/or post-filling procedures or treatments, the container can be closed with a cap affixed thereto, one or more labels can be applied to the container and many other operations. When some or all of the processing have been completed, the retaining and transport equipment and container are moved to an exit area, the container is removed from the retaining and transport equipment, and the retaining and transport equipment is redirected to an entry area to receive a new container and start over with the path of the automated production line.

Typically, dozens or hundreds of retaining and transport equipment may be simultaneously present and in use along an automated production line.

In cases where an automated production line is used to perform operations on containers having different shapes and sizes from one another, each type of container requires a special series of puck with a dedicated geometry.

The Applicant has noted that each production line may require innumerable series of pucks of different geometry, resulting in the need for considerable storage space to house the pucks not in use.

The Applicant has also noted that replacing all the pucks of the production line for each shape and/or size change of the containers also requires considerable machine downtime.

The Applicant has therefore perceived that the fact of having available retaining and transport equipment adaptable for use with containers of different shapes and sizes can be advantageous in terms of reducing the storage space dedicated to retaining and transport equipment and machine downtime, with consequent reductions in production costs.

Document EP0501372A2 describes a container carrier that can be used with a variety of containers. Retaining elements are each arranged facing each other within the supporting body. Each retaining element has a base body radially slidable with respect to the supporting body to move towards and away from a container placed in the centre of the container carrier. A respective gripping element is mounted on each base body which is intended to contact the container.

Document US4159762A describes an apparatus for transferring containers of different sizes along a predetermined path comprising a housing, gripping means comprising a pair of first and second gripping elements connected to said housing which are movable between a gripping position in which a container is firmly and positively grasped, and a non-gripping position in which the container can be freely shifted between said gripping elements. Each of the gripping elements is defined by a plate having a central section and a pair of angularly oriented flat plate portions. The opposite pairs of angularly oriented flat plate portions have a plurality of projections and notches formed along their outer edges. The notches are arranged such that the notches of a pair of plate portions receive the projections of the opposite pair of plate portions.

The Applicant has noted that container carriers such as the one described in EP0501372A2 and US4159762A are suitable for retaining containers of different sizes, allowing the use of the same pucks even in the case of format change of the containers to be transported.

However, the Applicant has noted that in the event that containers of different shapes have to be processed on the same automated line, the gripping elements in devices such as those described in EP0501372A2 and US4159762A may not be able to properly grasp and retain the containers.

The Applicant has noted that this potential impediment is mainly due to the shape of the gripping elements which, although configured to retain containers of different but similar shapes, may not be able to grasp and retain containers of very different shapes correctly.

The Applicant has realised that the gripping elements of the retaining and transport equipment might be replaced in such a way as to adapt the shape of the gripping elements to the shape of the containers to be transported.

However, the Applicant has noted that the replacement of the gripping elements such as those described in document EP0501372A2 and in document US4159762A would require storage units of not negligible sizes in order to be able to store, when not in use, the various gripping elements.

The Applicant has also noted that it would be necessary to provide a set of gripping elements in which each gripping element should be correlated, within the storage unit, to the other gripping elements of the same set to allow all the gripping elements belonging to the same set of gripping elements to be traced and subsequently assembled.

The Applicant has perceived that by physically joining together the gripping elements of the same set of gripping elements in a single gripping member, the tracing within a storage unit of all the gripping elements of a same set would be immediate.

The Applicant has also perceived that by making this gripping member reversibly deformable in such a way that it can assume a configuration of minimum extent when not in use, the storage unit could have limited sizes.

The Applicant has therefore found that by providing a gripping member with a plurality of gripping bodies joined together by a connection body and making said connection body deformable between a storage condition in which the gripping bodies are arranged oriented to one another in a different way than when the gripping member is mounted on the retaining and transport equipment, the gripping member can assume a condition of minimum extent when not in use.

The Applicant has further found that by reversibly deforming the connection body when the gripping member is mounted on the retaining and transport equipment such that the gripping bodies can move away from each other, the gripping member can be used while still ensuring that the gripping bodies are physically connected to each other through the connection body.

The present invention therefore concerns, in a first aspect thereof, a gripping member for container retaining and transport equipment.

Preferably, a plurality of gripping bodies having respective contact surfaces configured to contact a container is provided.

Preferably, a connection body is provided connected to said plurality of gripping bodies and connecting the gripping bodies of said plurality of gripping bodies to each other.

Preferably, said connection body is deformable between a storage configuration and a gripping configuration.

Preferably, in said storage configuration said connection body is in an undeformed condition and arranges said gripping bodies parallel to respective first directions with respective contact surfaces not facing each other.

Preferably, in said gripping configuration said connection body is in a reversibly deformed condition and elongated in directions contained in a single reference plane and the gripping bodies are parallel to respective second directions not contained in said single reference plane, with the respective contact surfaces facing each other.

The present invention concerns, in a second aspect thereof, a retaining and transport equipment for retaining and transporting a container.

Preferably, there is provided a plurality of actuation devices movable along respective actuation directions towards and away from one other.

Preferably, a gripping member according to the first aspect of the present invention is provided.

Preferably, each gripping body is connected to a respective actuation device.

Preferably, a movement of the actuation devices away from each other results in an elongation of the connection body in directions parallel to said actuation directions, wherein said actuation directions are contained in said reference plane.

The present invention concerns, in a third aspect thereof, a method for transporting and retaining a container.

Preferably, it is provided providing a retaining and transport equipment according to the second aspect of the present invention.

Preferably, it is provided providing a storage unit containing a plurality of gripping members according to the first aspect of the present invention.

Preferably, each gripping member comprises contact surfaces of shapes and sizes adapted to contact a specific container.

Preferably, it is provided selecting, from said plurality of gripping members, a gripping member having contact surfaces adapted to contact a container to be transported.

Preferably, it is provided connecting each gripping body of the selected gripping member to a respective actuation device of the retaining and transport equipment.

Preferably, it is provided inserting the container to be transported between the gripping bodies.

In the present description and in the subsequent claims, the term "undeformed condition" means a condition in which a body is substantially free from internal stresses deriving from deformations.

In the present description and in the subsequent claims, the term "reversibly deformed condition" means a condition in which a body is deformed with respect to the undeformed condition and is subject to internal stresses that tend to return it to its undeformed condition.

In the present description and in the subsequent claims, the term "elongated" means a condition in which a body has one or more sizes of greater length than the non-elongated condition. These longer sizes come at the expense of an additional size that becomes thinner. By way of example, a sheet or foil-shaped body elongate in one or more directions parallel to a lying plane and at the same time becomes thinner in a direction perpendicular to said lying plane.

In the present description and in the subsequent claims, the term "yieldable material" means a material that tends to deform when subjected to deforming pressures or forces and to recover its original shape when such deforming pressures or forces cease.

The present invention may have, in all the aspects discussed above, at least one of the preferred features described below. These characteristics can therefore be present individually or in combination with each other, unless expressly stated otherwise, both in the gripping member of the first aspect of the present invention and in the equipment of the second aspect of the present invention and in the method of the third aspect of the present invention.

Preferably, the contact surfaces of the gripping bodies of the gripping member can be deformed so as to properly grasp and retain a container with a specific shape, or containers with shapes different but similar to each other.

Preferably, all gripping bodies belonging to a gripping member can be stored and retrieved from the storage unit together and at one time.

Preferably, the gripping bodies assume different mutual arrangements when the gripping member is mounted on the retaining and transport equipment and when it is stored in the storage unit.

In the storage configuration, the connection body is preferably in an undeformed condition.

Preferably, stresses within the connection body and the gripping member are substantially null when said connection body is in the storage configuration.

Preferably, the gripping bodies have a main development direction and, in the storage configuration, the main development direction of each gripping body is parallel to a respective first direction.

Preferably, in the storage configuration each contact surface is not turned towards contact surfaces of other gripping bodies of the gripping member.

Preferably, the extent in vertical direction of the gripping bodies is minimal when the connection body is in the storage configuration.

Preferably, the gripping members are stored in the storage unit one above the other to create neat stacks.

In the gripping configuration the connection body is preferably in a reversibly deformed condition.

Preferably, in the gripping configuration the connection body autonomously tends to return to the storage configuration in the absence of external forces or constraints.

Preferably, in the gripping configuration the connection body is maintained in a deformed condition by the actuation devices to which the gripping member is coupled.

Preferably, the elongation of the connection body in the reference plane allows the gripping bodies to move away from each other.

Preferably, it is provided to adjust the mutual distance of the gripping bodies by elongating the connection body.

Preferably, it is provided spacing apart the gripping bodies sufficiently to be able to accommodate a container between them and subsequently moving them closer to press the contact surfaces against respective outer surfaces of the container.

Preferably, the main development direction of each gripping body is, in the gripping surface, parallel to a respective second direction.

Preferably, the second directions are not parallel to the first directions.

Preferably, the second directions are not contained in the reference plane.

Preferably, in the gripping configuration, each contact surface is turned towards one or more other contact surfaces.

Preferably, the gripping member may be mounted on a transfer and transport equipment such that the gripping bodies are not aligned or parallel to the reference plane.

Preferably, an elongation of the connection body in directions contained in the reference plane allows to change the distance between the gripping bodies.

Preferably, in the storage configuration the connection body is parallel to said reference plane.

Preferably, in the storage configuration the connection body has two main development sizes defining the reference plane.

Preferably, in the gripping configuration the connection body is elongated in directions contained in such a reference plane.

Preferably, the connection body has main development sizes that remain parallel to each other in the storage configuration and in the gripping configuration.

Preferably, in the storage configuration the first directions are contained in said reference plane.

Preferably, in the storage condition the gripping bodies and the reference plane are substantially coplanar and the extent of the gripping member is minimal.

Preferably, said connection body is deformable in an assembly configuration.

Preferably, in the assembly configuration the connection body is in a reversibly deformed condition wherein the gripping bodies are parallel to said second directions.

Preferably, in the assembly configuration the connection body is in a reversibly deformed condition with the respective contact surfaces facing each other.

Preferably, in the assembly configuration the connection body is in a reversibly deformed condition with the connection body not elongated.

Preferably, the connection body can be arranged mounted on the gripping and transport equipment in the assembly configuration without elongating the connection body.

Preferably, said connection body is deformable in a retaining configuration.

Preferably, in the retaining configuration the connection body is in a reversibly deformed condition wherein the gripping bodies are parallel to said second directions.

Preferably, in the retaining configuration the connection body is arranged with the respective contact surfaces facing each other.

Preferably, in the retaining configuration the connection body is in a reversibly deformed condition with the connection body either not elongated or elongated, depending on the sizes of the container C.

Preferably, in the retaining configuration the gripping bodies are in contact with a container retaining it.

Preferably, a plurality of coupling portions is provided wherein each coupling portion is configured to couple a gripping body to a respective actuation device.

Preferably, each gripping body can be actuated independently of the other gripping bodies by the respective actuation device.

Preferably, said plurality of coupling portions is provided on said connection body on an opposite side with respect to said gripping bodies.

Preferably, the actuation devices can be coupled to the respective coupling portions by arranging the contact surfaces of the gripping member directly facing each other.

Preferably, said connection body is a monolithic body made of natural or synthetic elastomeric material.

Preferably, a support base configured to support a container is provided.

Preferably, said support base is placed on said connection body in a central position with respect to said gripping bodies.

Preferably, the support base cooperates with the gripping bodies by supporting the container from below, and the gripping bodies retain the container laterally.

Preferably, the container is positioned on the support base before the gripping bodies are moved towards the container to grasp it laterally.

Preferably, the gripping bodies are made of yieldable material.

Preferably, the gripping bodies are made of a more yieldable material than the container to be retained.

Preferably, the contact surfaces deform adapting to the shape of the container.

Preferably, when the contact surfaces of the gripping bodies grasp a container, the container is retained without plays.

Preferably, the support base is made of yieldable material.

Preferably, the support base is made of a more yieldable material than the container to be retained.

Preferably, the support base is made of the same material as the gripping elements.

Preferably, the connection body comprises two main development sizes with respect to a third development size.

Preferably, the connection body is in the form of a foil or sheet.

Preferably, the connection body comprises a central portion and a plurality of peripheral portions.

Preferably, there is provided a peripheral portion of the plurality of peripheral portions for each gripping body.

Preferably, each gripping body is directly connected to a respective peripheral portion.

Preferably, the central portion connects said peripheral portions to each other.

Preferably, the peripheral portions are formed as lobes protruding from the central portion.

Preferably, the central portion is parallel to the reference plane when the connection body is in the storage configuration.

Preferably, the central portion is parallel to the reference plane when the connection body is in the assembly configuration.

Preferably, the central portion is parallel to the reference plane when the connection body is in the gripping configuration.

Preferably, the central portion is parallel to the reference plane when the connection body is in the retaining configuration.

Preferably, when the connection body is in the gripping configuration, said central portion is elongated in directions parallel to the reference plane.

Preferably, when the connection body is in the retaining configuration and the central portion is elongated, the central portion is elongated in directions parallel to the reference plane.

Preferably, each peripheral portion is aligned with the first direction of the respective gripping body when the connection body is in the storage configu ration.

Preferably, when the connection body is in the assembly configuration said peripheral portions are aligned with said second directions.

Preferably, when the connection body is in the gripping configuration said peripheral portions are aligned with said second directions.

Preferably, when the connection body is in the retaining configuration said peripheral portions are aligned with said second directions.

Preferably, each peripheral portion is not aligned with the first direction of the respective gripping body when the connection body is in the gripping configu ration.

Preferably, each peripheral portion is not aligned with the first direction of the respective gripping body when the connection body is in the retaining configuration.

Preferably, each actuation device of said plurality of actuation devices comprises a drive element.

Preferably, said gripping member comprises a coupling portion for each drive element.

Preferably, each coupling portion is removably connected to a respective drive element to constrain said gripping member to said actuation devices.

Preferably, said coupling portion of the gripping member comprises a pocket fitted onto a strut of said drive element.

Preferably, providing a storage unit containing a plurality of gripping members comprises housing said plurality of gripping members in the storage unit with the respective connection bodies in the storage configuration.

Preferably, selecting a gripping member having contact surfaces adapted to contact a container to be transported comprises selecting a gripping member having contact surfaces countershaped to an outer surface of the container to be transported.

Preferably, inserting the container to be transported between the gripping bodies is preceded by moving the actuation devices away from each other along said actuation directions and elongating the connection body in directions parallel to said actuation directions.

Preferably, connecting each gripping body of the selected gripping member to a respective actuation device comprises arranging the gripping member in an assembly configuration.

Preferably, arranging the gripping member in an assembly configuration comprises arranging said connection body in a reversibly deformed condition.

Preferably, arranging said connection body in a reversibly deformed condition comprises orienting the gripping bodies parallel to said second directions, with the respective contact surfaces facing each other and with the connection body not elongated.

Preferably, connecting each gripping body of the selected gripping member to a respective actuation device comprises fitting a pocket of the gripping member onto a strut of a respective actuation device.

Further characteristics and advantages of the present invention will become clearer from the following detailed description of a preferred embodiment thereof, with reference to the appended drawings and provided by way of indicative and non-limiting example, in which:
- Figure 1 is a side view of a container retaining and transporting equipment in accordance with an aspect of the present invention;
- Figure 2 is a side view of the equipment of Figure 1 in a different operating configuration;
- Figure 3 is a perspective view of the equipment of Figure 2;
- Figure 4 is a perspective view of a gripping member for container retaining and transporting equipment in accordance with an aspect of the present invention;
- Figure 5 is a top view of the gripping member of Figure 4;
- Figure 6 is a side view of the gripping member of Figure 4;
- Figure 7 is a perspective view of the gripping member of Figure 4 in a different operating configuration;
- Figure 8 is a top view of the gripping member of Figure 7;
- Figure 9 is a side view of the gripping member of Figure 8.

An equipment for retaining and transporting a container C in accordance with an aspect of the present invention has been indicated as a whole with reference numeral 10.

The container C may be in the form of a bottle, a flask, an ampoule or a vial. In more detail, the container C comprises a base portion, not illustrated, which may define a support base surface for the container C or it may not define a support base surface, for example may have a curved shape. The container C further comprises a neck portion C1 opposite the base portion and having an access opening to the inner volume of the container C. A side wall C2 extends between the base portion and the neck portion C1 and may have a cylindrical, prismatic or curved shape.

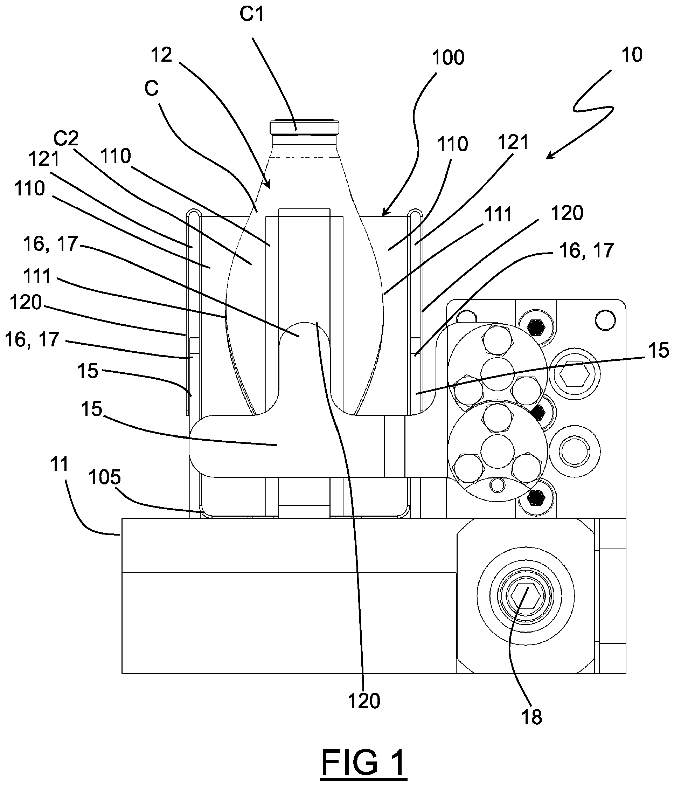

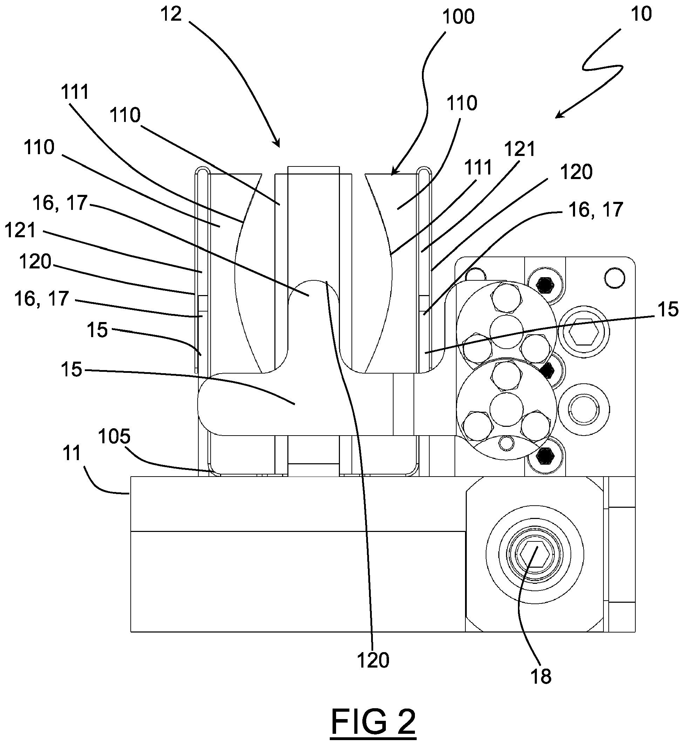

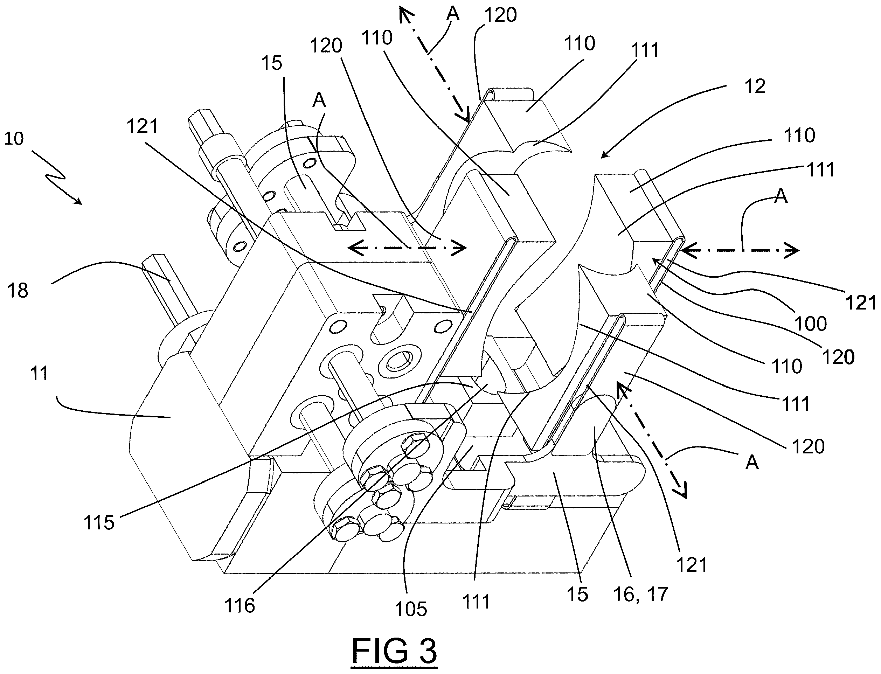

The equipment 10, shown in Figures 1 to 3, comprises a supporting frame 11 to which a carriage (not illustrated) configured to be inserted into a track of a path of an automated production line is connected. The carriage can move autonomously along the track or it can move drivingly to follow the track.

In the event that the carriage is autonomously movable, the carriage may comprise power supply members (not illustrated) connected to drive wheels (not illustrated) of the carriage. Such electrical movement parts may for example comprise an electric motor powered by rechargeable batteries contained in the carriage or powered directly by the track of the path of the automated production line. In the event that the carriage is not autonomously movable, the track may comprise a plurality of housing seats for the carriage that move along the track by driving the carriage into motion.

The equipment 10 comprises a housing seat 12 configured to house a container C. The container C, when placed in the housing seat 12, has the access mouth C1 turned upwards, i.e. on the opposite side with respect to the track along which the equipment 10 is movable.

The equipment 10 comprises a plurality of actuation devices 15, preferably four. The actuation devices 15 are distributed around the housing seat 12. Preferably, the actuation devices 15 are arranged opposed two by two with respect to the housing seat 12.

Each actuation device 15 comprises a drive element 16 having a free end. Preferably, the drive element 16 comprises a strut 17 that extends in vertical direction as far as the free end. This vertical direction is orthogonal with respect to the direction of movement of the equipment 10 along the track.

Preferably, each actuation device 15 is made of rigid material. For example, the actuation devices 15 may be made of metal alloys such as steels or aluminium alloys or the like and alternatively or in combination of plastic material.

Each actuation device 15 is slidingly connected to the supporting frame 11 so as to be movable with respect to the supporting frame 11 along a respective actuation direction A towards, and away from, the housing seat 12. Preferably, the actuation devices 15 are movable two by two towards and away from one another. The actuation directions A of actuation devices 15 that are opposite one another are preferably parallel to each other. More preferably, the actuation directions A of actuation devices 15 that are opposite one another are coincident.

In the illustrated embodiment, the actuation devices 15 engage respective guides (not illustrated) of the frame 11 that allow their translation with respect to the frame along the respective actuation directions A.

The actuation devices 15 can be moved along the respective actuation directions A by means of an actuation kinematics (not illustrated) arranged inside the frame 11. The equipment 10 comprises an actuation portion 18 accessible from outside the frame configured to move the actuation devices 15 along the respective actuation directions A through the actuation kinematics. The actuation portion 18 is mechanically engageable by an actuation mechanism (not illustrated) external to the equipment 10, preferably by mechanical coupling. In the illustrated embodiment, the actuation portion is actuatable in rotation. By actuating the actuation portion 18, all the actuation devices 15 move in a coordinated manner with each other along the respective actuation directions A. For example, a first direction of rotation of the actuation portion 18 corresponds to a movement of the actuation devices 15 away from the housing seat 12 and a second direction of rotation of the actuation portion 18, opposite the first direction of rotation, corresponds to a movement of the actuation devices 15 towards the housing seat 12.

A gripping member for container retaining and transporting equipment in accordance with another aspect of the present invention is indicated by the numerical reference 100.

The gripping member 100 can be reversibly coupled to the actuation devices 15 of the equipment 10 to retain a container C in the housing seat 12.

The gripping member 100 comprises a reversibly deformable connection body 105. Preferably, the connection body 105 is a monolithic body made of natural or synthetic elastomeric material.

In the illustrated embodiment, the connection body 105 is formed by a shaped sheet 106. Preferably, the connection body 105 comprises a central portion 107 and a plurality of peripheral portions 108. The peripheral portions 108 depart from and are connected to the central portion 107. The peripheral portions 108 extend as far as respective free ends 109. The number of peripheral portions 108 is equal to the number of actuation devices 15 of the equipment 10. For example, in the illustrated embodiment the number of peripheral portions 108 is equal to four.

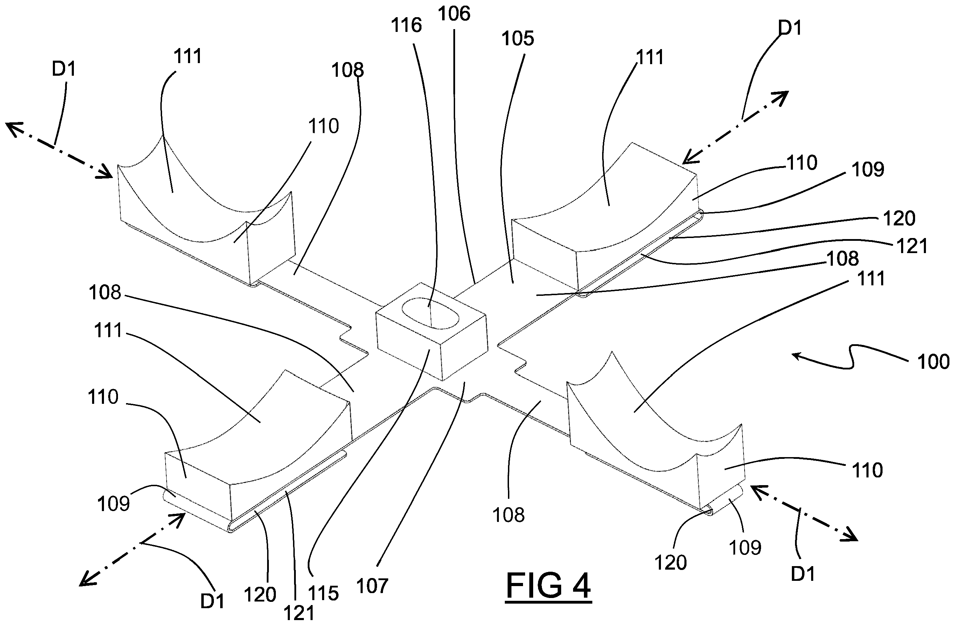

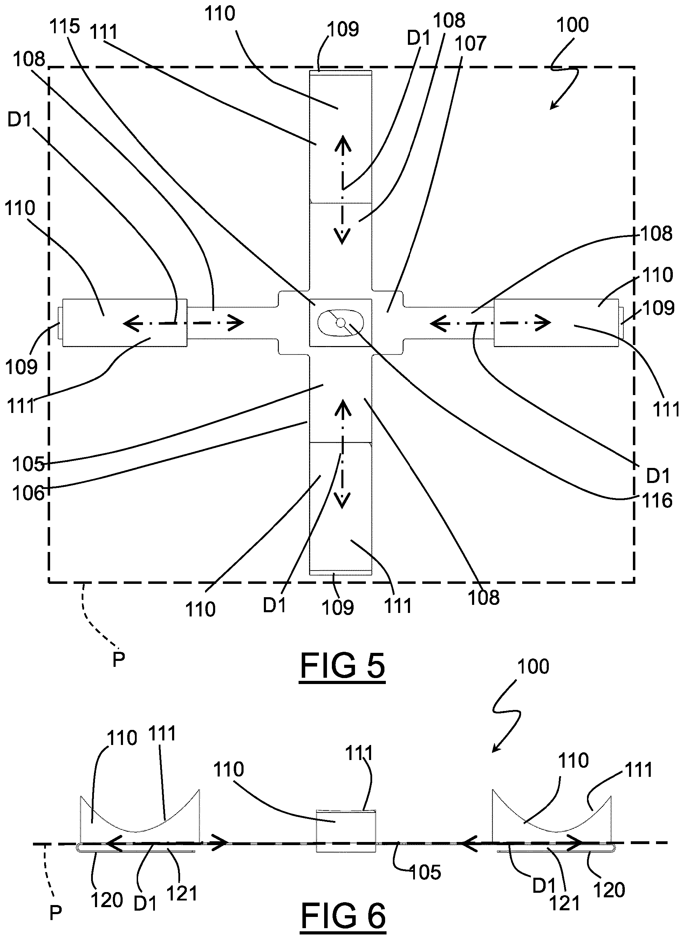

The connection body 105, in an undeformed condition, identifies a reference plane P, illustrated in Figures 4 and 5. The reference plane P may be, for example, the plane defined by the two main development directions of the connection body 105 in an undeformed condition. In the illustrated embodiment, the reference plane P corresponds to the lying plane of the shaped sheet 106.

The connection body 105 is flexible, preferably elastically. The portions of the connection body 105 may be reversibly bent with respect to the reference plane P. For example, the peripheral portions 108 may be bent so as to lie outside the reference plane P.

The connection body 105 can preferably be elongated, preferably elastically and reversibly. Portions of the connection body 105 may be elongated in the reference plane P or outside the reference plane P and return to the original sizes. The central portion 107 may be elongated in directions contained in the reference plane P and then return to the original sizes. The length of the peripheral portions 108, measured from the central portion 107 to the free end 109, may be increased as a result of the extension of the connection body and return to the original length.

The elongation of the connection body or of its portions takes place due to a deforming, preferably traction force. The return to the original sizes takes place when this deforming force is removed.

The gripping member 100 comprises a plurality of gripping bodies 110, preferably in number equal to the number of actuation devices 15 of the equipment 10. In the illustrated example, the gripping member 100 comprises four gripping bodies 110. Each gripping body 110 protrudes from the connection body 105, for example from a respective peripheral portion 108. In the illustrated embodiment, each gripping body 110 is arranged at the free end 109 of a respective peripheral portion 108.

Each gripping body 110 is shaped as a parallelepiped or a prism resting on a peripheral portion 108 of the connection body and stably connected to said peripheral portion 108.

In the undeformed condition of the connection body 105, the gripping bodies 110 protrude in orthogonal direction from the reference plane P. All the gripping bodies 110 are fixed by the same part of the connection body 105 with respect to the reference plane P. The gripping bodies 110 can be fixed to the connection body 105 or made as one piece therewith.

The gripping bodies 110 are made of yielding material. For example, the gripping bodies 110 can be made of natural or synthetic polymeric or elastomeric material, for example in elastic expanded polyurethane. In some embodiments, the gripping bodies 110 are made of the same material as the connection body 105.

Each gripping body 110 has a respective contact surface 111 configured to contact an outer surface of a container C. In the undeformed condition of the connection body 105, the contact surface 111 is turned away from the connection body 105, i.e. is not facing the connection body 105.

Each contact surface 111 is substantially countershaped to a respective outer surface of the side wall C2 of a container C having a predefined shape, so as to substantially adhere to the outer surface of the container C when the gripping body 110 is pressed against it. The yieldability of the gripping body 110 allows the contact surface 111 to adhere to outer surfaces of containers C having different shapes but which are similar to the predefined one.

The gripping member 100 comprises a support base 115 configured to support the container C. The support base 115 protrudes from the connection body 105, for example from the central portion 107. In the undeformed condition of the connection body 105, the support base 115 is arranged in a central position with respect to the gripping bodies 110. The support base 115 protrudes from the connection body on the same side as the gripping bodies 110.

The support base 115 may be fixed to the connection body 105 or made as one piece therewith.

The support base 115 is made of yielding material. For example, the support base 115 can be made of natural or synthetic polymeric or elastomeric material, for example of elastic expanded polyurethane. In some embodiments the support base 115 is made of the same material as the connection body 105.

The support base 115 has a respective base surface 116 configured to contact an outer surface of the base portion of a container C. The base surface 116 is turned away from the connection body 105.

The base surface 116 is substantially countershaped to the outer surface of the base portion of the container C having a predefined shape, so as to adhere substantially to it when the gripping body 110 of the container C is resting on the support base 115. The yieldability of the support base 115 allows the base surface 116 to adhere to outer surfaces having different shapes but which are similar to the predefined one.

The gripping member 100 further comprises a plurality of coupling portions 120, preferably in number equal to the number of gripping body 110. In the illustrated example, the gripping member 100 comprises four coupling portions 120.

Each coupling portion 120 is arranged on the connection body 105 at a respective gripping body 110, preferably opposite the respective gripping body 110. In the illustrated embodiment, each coupling portion 120 is arranged at the free end 109 of a respective peripheral portion 108 of the connection body 105.

Each coupling portion 120 is configured to couple a gripping body 110 to a respective actuation device 15 of the equipment 10, in particular to the drive element 16. The coupling portion 120 is configured to reversibly fix the gripping body 110 to the drive element 16 such that the gripping body 110 can be moved integrally with the actuation device 15. The coupling portion 120 comprises or defines a pocket 121 configured to be fitted onto the strut 17 of the respective actuation device 15. This pocket has an opening distal from the free end 109 of the peripheral portion 108 of the connection body 105 and is preferably connected to the peripheral portion 108 along respective edges to define, in combination with the peripheral portion, a sleeve. In some embodiments, the pocket 121 is closed at the free end 109 of the peripheral portion 108 of the connection body 105 so as to define a sleeve having only one opening.

When the gripping member 100 is not coupled to the actuation devices 15, the connection body 105 is arranged in a storage configuration, illustrated in Figures 4 to 6.

In the storage configuration, the connection body 105 is in an undeformed condition and lies in the reference plane P. The gripping bodies 110 are arranged parallel to first directions D1, parallel to each other and preferably contained in the reference plane P. In other words, in the storage configuration the gripping bodies 110 have a main development direction that is parallel to the first directions D1.

In the storage configuration of the connection body 105, the contact surfaces 111 of the gripping bodies 110 are not facing each other. Preferably, in the storage configuration the contact surfaces 111 are all turned in the same direction such that the connection body is flat.

The storage configuration coincides with a minimum extent configuration of the gripping member 100 in a direction orthogonal to the reference plane P.

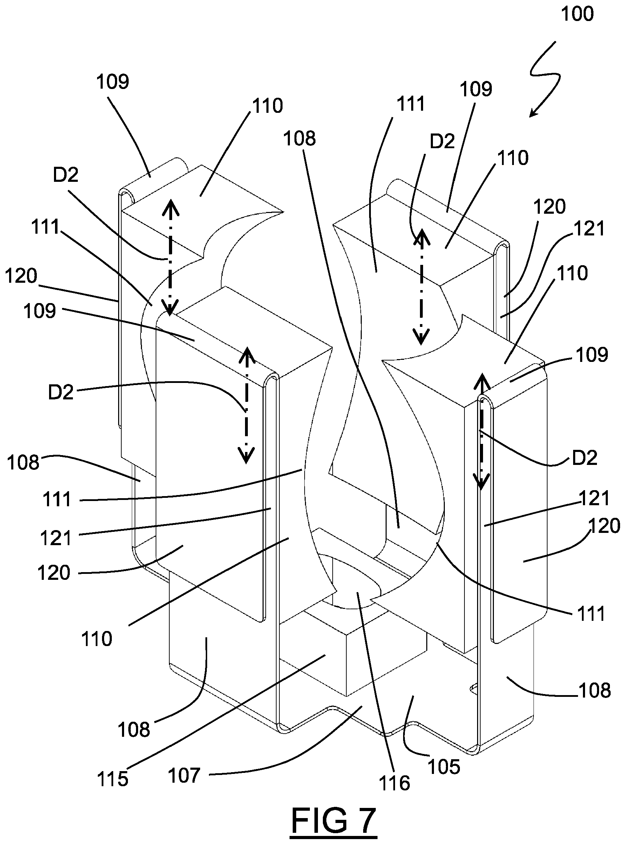

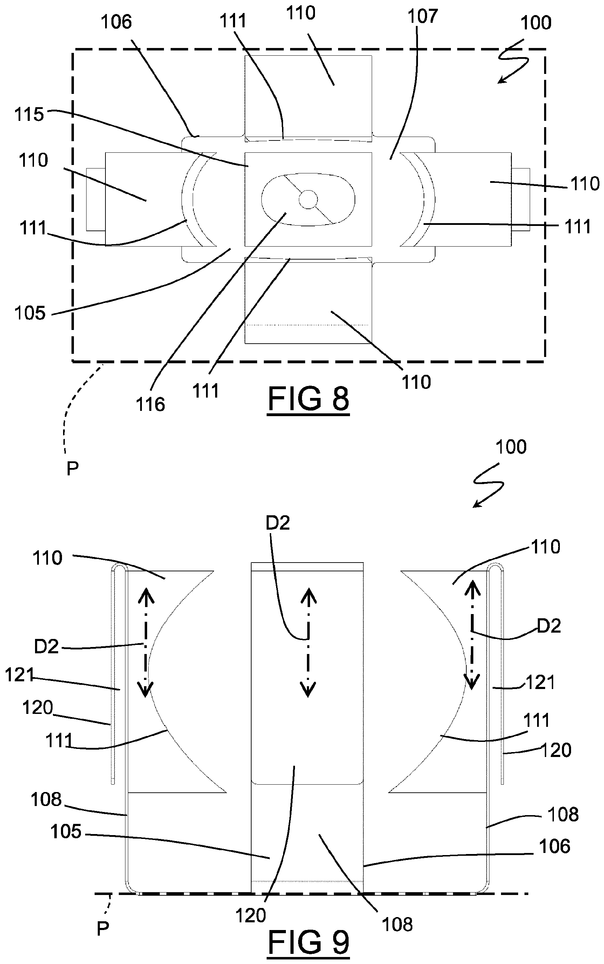

The connection body 105 is deformable in an assembly configuration, illustrated in Figures 7 to 9, in which the gripping member 100 can be coupled to the actuation devices 15 of the equipment 10.

In the assembly configuration, the connection body 105 is in a reversibly deformed condition that orients the gripping bodies 110 parallel to second directions D2 not contained in the reference plane P and preferably substantially orthogonal to the reference plane P. In the assembly configuration, the gripping bodies 110 have a main development direction that is parallel to the second directions D2. In the assembly configuration, the contact surfaces 111 of the gripping bodies 110 are facing each other. In the illustrated embodiment, the contact surfaces 111 are facing two by two.

In the assembly configuration, the connection body 105 is not elongated. The central portion 107 of the connection body 105 is parallel to the reference plane P and the peripheral portions 108 are bent, preferably elastically, so as to be arranged parallel to the second directions D2 and to orient the gripping bodies 110 parallel to the second directions D2.

In the assembly configuration each coupling portion 120 may be coupled to a respective retaining element 16 of the equipment 10 so as to couple the gripping member 100 to the equipment 10.

Further, in some embodiments, in the assembly configuration the connection body 105 may be reversibly fixed to the supporting frame 11 to retain it in a fixed position. The connection body 105 may be connected at the central portion 107 to the supporting frame 11 of the equipment 10 such that the central portion 107 assumes a fixed and unchangeable position with respect to the supporting frame 11.

If disassembled from the equipment 10 and not subject to external forces, the connection body 105 tends to return elastically from the assembly configuration to the storage configuration.

The connection body 105 is reversibly deformable in a gripping configuration in which the gripping bodies 110 are arranged to subsequently grasp and retain a container C. Starting from the assembly configuration, the connection body 105 mounted on the equipment 10 is deformable in the gripping configuration by moving the actuation devices 15 away from each other along the respective actuation directions A.

In the gripping configuration the connection body 105 is in a reversibly deformed condition with the gripping bodies 110 parallel to the second directions D2. In the gripping configuration, the contact surfaces 111 of the gripping bodies 110 are facing each other. In the illustrated embodiment, the contact surfaces 111 are facing two by two.

In the gripping configuration, the central portion 107 of the connection body 105 is parallel to the reference plane P and the peripheral portions 108 are bent, preferably elastically, so as to be arranged parallel to the second directions D2 and to orient the gripping bodies 110 parallel to the second directions D2.

In the gripping configuration, the connection body 105 is elastically and reversibly elongated in directions contained in the reference plane P, preferably, at the central portion 107.

In the gripping configuration, the retaining elements 16 coupled to the coupling portions 120 maintain the connection body 105 in a deformed configuration. The contact surfaces 111 of the gripping bodies 110 face the housing seat 12.

Further, in the gripping configuration the base surface 116 of the support base 115 faces the housing seat 12 and may support a container C arranged in the housing seat 12. More in detail, the base surface is configured to come into contact with the base portion of the container C.

The connection body 105 is reversibly deformable in a retaining configuration in which the gripping bodies 110 grasp and retain a container C. Starting from the gripping configuration, the connection body 105 mounted on the equipment 10 is deformable in the retaining configuration by moving the actuation devices 15 towards each other along the respective actuation directions A.

In this way, the contact surfaces 111 can come into contact and retain a container C arranged in the housing seat 12. The contact surfaces 111 are configured to retain the container C with the respective neck portion C1 exposed and turned upwards.

By moving the actuation devices 15 towards each other, the connection body 105 tends to elastically return from the gripping configuration to the assembly configuration.

In the retaining configuration the connection body 105 is in a reversibly deformed condition with the gripping bodies 110 parallel to the second directions D2. In the retaining configuration, the contact surfaces 111 of the gripping bodies 110 are facing each other. In the illustrated embodiment, the contact surfaces 111 are facing two by two.

In the retaining configuration, the central portion 107 of the connection body 105 is parallel to the reference plane P and the peripheral portions 108 are bent, preferably elastically, so as to be arranged parallel to the second directions D2 and to orient the gripping bodies 110 parallel to the second directions D2.

In the retaining configuration, the connection body 105 may be elastically and reversibly elongated in directions contained in the reference plane P, preferably at the central portion 107, or it may not be elongated, depending on the size of the retained container.

When the gripping member and the equipment 10 are in use, a plurality of gripping members 100 as described above are placed in a storage unit, with the respective connection bodies 105 in the storage configuration. The gripping members 100 may, for example, be one above the other to form one or more stacks, so as to reduce the extents.

Each gripping member 100 in the storage unit comprises contact surfaces 111 of shapes and sizes adapted to contact a specific container C, or containers C similar to such a specific container C. The plurality of gripping members 100 in the storage unit may comprise different series of gripping members 100, wherein the gripping members 100 of each series are identical to each other and the gripping members 100 of different series have contact surfaces 111 of different shapes and sizes and adapted to contact containers C of different shapes and sizes.

Among the gripping members 100 in the storage unit, a gripping member 100, or a series of gripping members 100, is selected having contact surfaces 111 adapted to contact a specific container C, wherein the contact surfaces 111 are substantially countershaped to an outer surface of the container C.

Each gripping body 110 of the selected gripping member 100 is coupled to a respective actuation device 15 of the equipment 10. For this purpose, each coupling portion 120 is coupled to a respective actuation device 15. This coupling is carried out by fitting the pocket 121 of the gripping member 100 onto the strut 17 of the actuation device, by possibly elastically deforming the peripheral portion 108 to facilitate the insertion of the strut 17 into the pocket 121. In any case, once the coupling has been made, the gripping member 100 and in particular the connection body 105 is not elongated and has the same sizes as when it is in the storage configuration. The gripping bodies 110 are thus arranged substantially parallel to the struts 17 of the actuation device 15 aligned with the cited second directions D2 with the gripping surfaces 111 facing each other.

Subsequently, the actuation devices 15 are moved away from each other along the actuation directions A. This movement results in a corresponding movement of the gripping bodies 110 (integral with the struts 17 of the actuation devices 15) away from each other. The movement of the gripping bodies 110 away from each other is accompanied by an elongation of the connection body 105 along directions parallel to the actuation directions A. This elongation takes place in the reference plane P by configuring the gripping member in the gripping configuration.

When the actuation devices 15 have been moved away from each other by an amount sufficient for inserting the container C into the housing seat 12, the container C can be arranged in the housing seat 12.

The actuation devices 15 are then moved towards each other along the actuation directions A so as to have the contact surfaces 111 come into contact with the outer surfaces of the container C, so as to grasp the container C. The gripping member is configured in the retaining configuration (shown in Figure 1).

In this configuration, the gripping bodies 110 are arranged substantially parallel to the struts 17 of the actuation device 15 and aligned with the cited second directions D2 with the gripping surfaces 111 facing each other. The connection body 105 may be elongated in the reference plane P or it may not be elongated and have the same sizes as when it is in the storage or assembly configuration, depending on the sizes of the container C.

## Claims

1. Gripping member (100) for container retaining and transport equipment (10) comprising a plurality of gripping bodies (110) having respective contact surfaces (111) configured to contact a container (C) and a connection body (105) connected to said plurality of gripping bodies (110) and connecting the gripping bodies (110) of said plurality of gripping bodies (110) to each other;
said connection body (105) being deformable between a storage configuration and a gripping configuration,
wherein in said storage configuration said connection body (105) is in an undeformed condition and arranges said gripping bodies (110) parallel to respective first directions (D1) with the respective contact surfaces (111) not facing each other;
and wherein, in said gripping configuration, said connection body (105) is in a reversibly deformed condition and elongated in directions contained in a reference plane (P) and wherein said gripping bodies (110) are parallel to respective second directions (D2) not contained in said reference plane (P), with respective contact surfaces (111) facing each other.

2. Gripping member (100) according to claim 1, wherein in the storage configuration said connection body (105) is parallel to said reference plane (P) and said first directions (D1) are contained in said reference plane (P).

3. Gripping member (100) according to claim 2, wherein said connection body (105) is further deformable in an assembly configuration wherein said connection body (105) is in a reversibly deformed condition wherein said gripping bodies (110) are parallel to said second directions (D2), with respective contact surfaces (111) facing each other and with the connection body (105) not elongated.

4. Gripping member (100) according to any one of the preceding claims, comprising a plurality of coupling portions (120) wherein each coupling portion (120) is configured to couple a gripping body (110) to a respective actuation device (15).

5. Gripping member (100) according to claim 4 wherein said plurality of coupling portions (120) are provided on said connection body (105) on an opposite side with respect to said gripping bodies (110).

6. Gripping member (100) according to any one of the preceding claims, wherein said connection body (105) is a monolithic body made of natural or synthetic elastomeric material.

7. Gripping member (100) according to any one of the preceding claims, comprising a support base (115) configured to support a container (C); said support base (115) being placed on said connection body (105) in a central position with respect to said gripping bodies (110).

8. Retaining and transport equipment (10) for retaining and transporting a container (C), comprising:
a plurality of actuation devices (15) movable along respective actuation directions (A) towards and away from one other;
a gripping member (100) according to any one of the preceding claims, wherein each gripping body (110) is connected to a respective actuation device (15), wherein a movement of the actuation devices (15) away from each other results in an elongation of the connection body (105) in directions parallel to said actuation directions (A), wherein said actuation directions (A) are contained in said reference plane (P).

9. Retaining and transport equipment (10) according to claim 8, wherein each actuation device (15) of said plurality of actuation devices (15) comprises a drive element (16) and wherein said gripping member (100) comprises a coupling portion (120) for each drive element (16); each coupling portion (120) being removably connected to a respective drive element (16) to couple said gripping member (100) to said actuation devices (15).

10. Retaining and transport equipment (10) according to claim 9, wherein said coupling portion (120) of the gripping member (100) comprises a pocket (121) fitted onto a strut (17) of said drive element (16).

11. Method for transporting and retaining a container comprising:
providing a retaining and transport equipment (10) according to claim 8;
providing a storage unit containing a plurality of gripping members (100) according to claim 1 wherein each gripping member (100) comprises contact surfaces (111) of shapes and sizes adapted to contact a specific container (C);
selecting, from said plurality of gripping members (100), a gripping member (100) having contact surfaces (111) adapted to contact a container (C) to be transported;
connecting each gripping body (110) of the selected gripping member (100) to a respective actuation device (15) of the equipment (10);
inserting the container (C) to be transported between the gripping bodies (110).

12. Method according to claim 11, wherein providing a storage unit containing a plurality of gripping members (100) comprises housing said plurality of gripping members (100) in the storage unit with respective connection bodies (105) in the storage configuration.

13. Method according to claim 11 or 12, wherein selecting a gripping member (100) having contact surfaces (111) adapted to contact a container (C) to be transported comprises selecting a gripping member (100) having contact surfaces (111) countershaped to an outer surface of the container (C) to be transported.

14. Method according to any one of claims 11 to 13, wherein inserting the container (C) to be transported between the gripping bodies (110) is preceded by moving the actuation devices (15) away from each other along said actuation directions (A) and elongating the connection body (105) in directions parallel to said actuation directions (A).

15. Method according to any one of claims 11 to 14, wherein connecting each gripping body (110) of the selected gripping member (100) to a respective actuation device (15) comprises arranging the gripping member (100) in an assembly configuration wherein said connection body (105) is in a reversibly deformed condition wherein said gripping bodies (110) are parallel to said second directions (D2), with respective contact surfaces (111) facing each other and with the connection body (105) not elongated.

16. Method according to claim 15, wherein connecting each gripping body (110) of the selected gripping member (100) to a respective actuation device (15) comprises fitting a pocket (121) of the gripping member (100) onto a strut of a respective actuation device (15).
